# EUROPÄISCHE PATENTSCHRIFT

(11) **EP 2 292 456 B1**
(45) Veröffentlichungstag und Bekanntmachung des Hinweises auf die Patenterteilung: **21.12.2011**
(21) Anmeldenummer: 09011299.6
(22) Anmeldetag: 03.09.2009
(51) Int. Cl.: B60J 5/06

(54) **Spanneinrichtung**
Clamping device
Dispositif de tension

(43) Veröffentlichungstag der Anmeldung: 09.03.2011
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Roßbach, Joachim, 41747 Viersen (DE); Kemmerling, Karl, 42719 Solingen (DE); Scholz, Axel, 47447 Moers (DE); Lauterbach, Tim, 41066 Mönchengladbach (DE); Weigelt, Rolf, 47228 Duisburg (DE); Ragnvald, Andersson, 46794 Grästorp (SE)
(74) Vertreter: DR. STARK & PARTNER

(56) Entgegenhaltungen:
- JP-U- 54 067 424
- US-A- 4 943 110
- US-A1- 2009 072 576

## Beschreibung

Die Erfindung betrifft ein Spanneinrichtung für ein entlang von Lauf- und Führungsschiene verschiebliches Schiebeverdeck, wobei die Spanneinrichtung im Bereich der Lauf- und Führungsschiene vorgesehen ist und einen um eine Achse verschwenkbar angeordneten und zwischen einer Verriegelungsposition und einer Freigabeposition verlagerbaren Betätigungshebel sowie ein mit einem an dem Endlaufwagen vorgesehenen Gegenlager zusammenwirkendes und den Endlaufwagen zum Ende der Lauf- und Führungsschiene bewegendes, durch den Betätigungshebel in seiner Position veränderbares Spannelement aufweist.

Aus der Praxis sind Spanneinrichtungen in verschiedensten Ausführungen bekannt, die im Laderaum angeordnet sind. Hierdurch ist sowohl die Betätigung mühsam und je nach Ausführung, beispielsweise durch langwierige Betätigung einer Kurbel, auch recht zeitaufwändig, und die Ladefläche wird verringert. Außerdem kann es zu Beschädigungen des Spannsystem durch die Ladung oder beim Be- und Entladen kommen.

Eine außerhalb der Ladefläche vorgesehene Spanneinrichtung ist aus der US 2009/0072576 A1 bekannt. Dieses Dokument offenbart den Oberbegriff des Anspruchs 1.

Aufgabe der Erfindung ist es, die vorgenannten Nachteile zu vermeiden und ein Spannsystem anzugeben, das einfach bedienbar ist.

Diese Aufgabe wird dadurch gelöst, dass das Spannelement in einer entsprechend dem Verlauf der Lauf- und Führungsschiene ausgerichteten Führung angeordnet und über ein sowohl an dem Spannelement als auch an dem Betätigungshebel jeweils gelenkig angeschlagenes Verbindungselement in seiner Führung in Längsrichtung zwischen einer den Endlaufwagen am Ende der Lauf- und Führungsschiene haltenden Verriegelungsposition und einer Freigabeposition verlagerbar ist, wobei die Führung in einem Teilbereich unterseitig einen solchen Freiraum aufweist, dass das Spannelement bei Verlagerung des Betätigungshebels in die Freigabeposition zumindest teilweise soweit absenkbar ist, dass der Endlaufwagen von dem Ende der Lauf- und Führungsschiene weg verschoben werden kann. Hierdurch wird kein Platz im Laderaum beansprucht, da die Spanneinrichtung außerhalb, insbesondere unterhalb der Ladefläche, vorgesehen ist.

Dabei kann das Spannelement beim Absenken auch zusätzlich verkippbar sein, wodurch eine teilweise Absenkung resultiert und der erhöhte Bereich des Spannelementes, der mit dem Gegenlager zusammenwirkt, soweit abgesenkt wird, dass das Gegenlager über das Spannelement hinweg bewegbar ist.

Vorzugsweise kann die Anlenkung des Verbindungselements an dem Betätigungshebel derart vorgesehen sein, dass diese bei Verlagerung des Betätigungshebels in die Verriegelungsposition über einen Totpunkt hinweg erfolgt, so dass eine automatische Verriegelung erfolgt und ein Lösen ohne Krafteinwirkung nicht erfolgen kann.

Erfindungsgemäß kann das Spannelement über ein Druckfederelement, das bei in seiner Verriegelungsposition befindlichem Betätigungshebel eine geringe Verlagerung innerhalb der Führung ermöglicht, mit dem Verbindungselement verbunden sein, so dass eine Anpassung an Veränderungen der Lage des Gegenlagers innerhalb gewisser Grenzen möglich ist.

Bei einem bevorzugten Ausführungsbeispiel der Erfindung kann dem Betätigungshebel ein Verriegelungselement zur Arretierung in seiner Verriegelungsposition zugeordnet sein, so dass eine nochmals verbesserte Sicherung gegen versehentliches Lösen der Verriegelung durch das Spannelement gegeben ist.

Vorteilhafterweise kann das Verriegelungselement am Betätigungshebel angeordnet sein und mit einer entsprechenden Aussparung in der Spanneinrichtung zusammenwirkend ausgebildet sein.

Bei einem bevorzugten Ausführungsbeispiel der Erfindung kann der Betätigungshebel, insbesondere gegen eine Rückstellkraft, ausziehbar ausgebildet sein, so dass eine Verlängerung des Hebelarms für eine leichtere Betätigung möglich ist und die Baugröße bei Nichtbenutzung reduziert ist.

Hierfür kann auch ein Verlängerungselement aus dem Betätigungshebel, insbesondere gegen eine Rückstellkraft, ausklappbar sein.

Zur genauen Anpassung kann das an dem Endlaufwagen vorgesehene Gegenlager in seiner Position verlagerbar und entsprechend in einer vorgewählten Position einstellbar ausgebildet sein, so dass eine zu große Spannkraft verringerbar bzw. eine nicht ausreichende Spannkraft vergrößerbar ist.

Auch kann das Spannelement hierfür gegen eine Rückstellkraft verlagerbar in der Führung vorgesehen und mit dem Verbindungselement verbunden sein.

Im Folgenden wird ein in der Zeichnung dargestelltes Ausführungsbeispiel der Erfindung erläutert. Es zeigen:
- Fig. 1: ein erstes Ausführungsbeispiel einer erfindungsgemäßen Spanneinrichtung in ge- schlossenem Zustand in einer seitlichen An- sicht,
- Fig. 2: den Gegenstand nach Fig. 1 in einer perspekti- vischen Ansicht von schräg oben,
- Fig. 3: den Gegenstand nach Fig. 1 in halb geöffnetem Zustand,
- Fig. 4: den Gegenstand nach Fig. 3 in einer perspekti- vischen Ansicht von schräg oben,
- Fig. 5: den Gegenstand nach Fig. 1 in geöffnetem Zu- stand,
- Fig. 6: den Gegenstand nach Fig. 5 in einer perspekti- vischen Ansicht von schräg oben,
- Fig. 7: eine Detailansicht eines zweiten Ausführungsbeispiels einer erfindungsgemäßen Spanneinrichtung, und
- Fig. 8: eine Detailansicht eines dritten Ausführungsbeispiels einer erfindungsgemäßen Spanneinrichtung.

In allen Figuren werden für gleiche bzw. gleichartige Bauteile übereinstimmende Bezugszeichen verwendet.

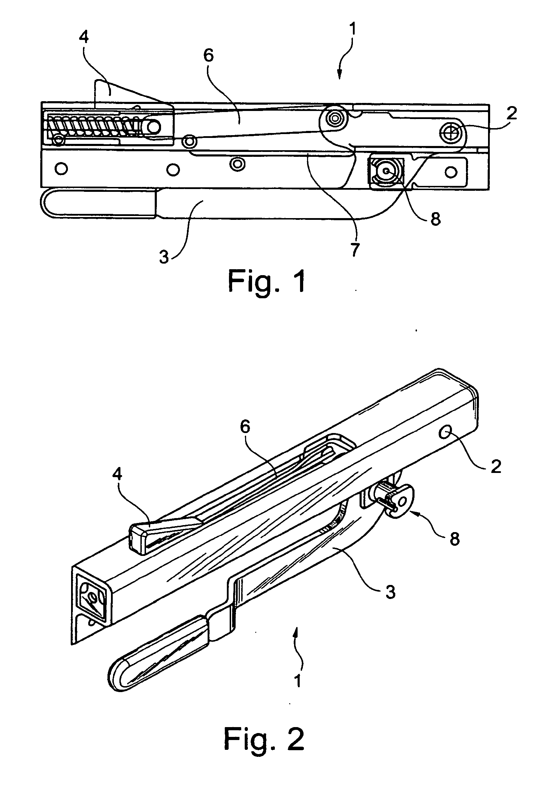

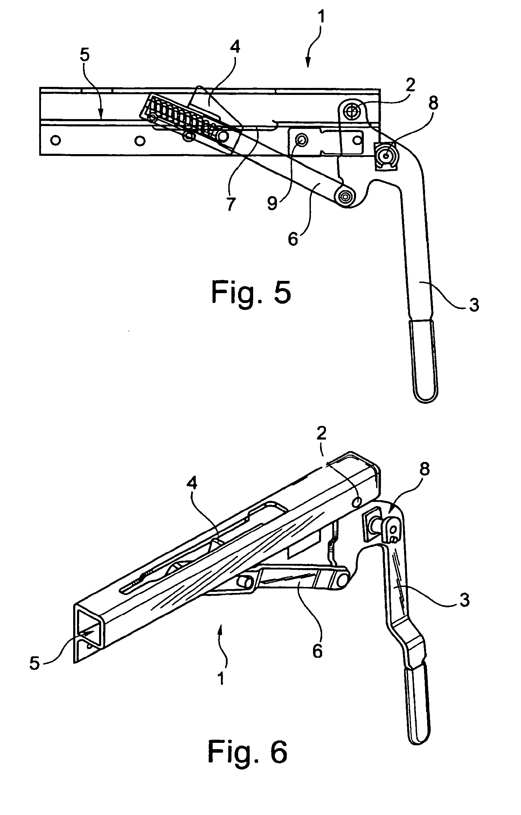

Die Figuren zeigen eine Spanneinrichtung 1 für ein entlang von Lauf- und Führungsschienen 15 verschiebliches, in der Zeichnung nicht dargestelltes Schiebeverdeck, wobei die Spanneinrichtung 1 im Bereich der Lauf- und Führungsschiene vorgesehen ist und einen um eine Achse 2 verschwenkbar angeordneten und zwischen einer Verriegelungsposition (Figuren 1 und 2) und einer Freigabeposition (Figuren 5 und 6) verlagerbaren Betätigungshebel 3 sowie ein durch den Betätigungshebel 3 in seiner Position veränderbares Spannelement 4 aufweist.

Dabei ist das Spannelement 4 in einer entsprechend dem Verlauf der Lauf- und Führungsschiene 15 ausgerichteten Führung 5 angeordnet und über ein sowohl an dem Spannelement 4 als auch an dem Betätigungshebel 3 jeweils gelenkig angeschlagenes Verbindungselement 6 in seiner Führung 5 in Längsrichtung zwischen einer den in der Zeichnung nicht dargestellten Endlaufwagen 10 am Ende der Lauf- und Führungsschiene haltenden Verriegelungsposition (Figuren 1 und 2) und einer Freigabeposition (Figuren 5 und 6) verlagerbar.

Die Führung 5 weist in einem Teilbereich unterseitig einen solchen Freiraum 7 auf, dass das Spannelement 4 bei Verlagerung des Betätigungshebels 3 in die Freigabeposition zumindest teilweise soweit absenkbar ist, dass der in der Zeichnung nicht dargestellte Endlaufwagen 10 von dem Ende der Lauf- und Führungsschiene 15 weg verschoben werden kann.

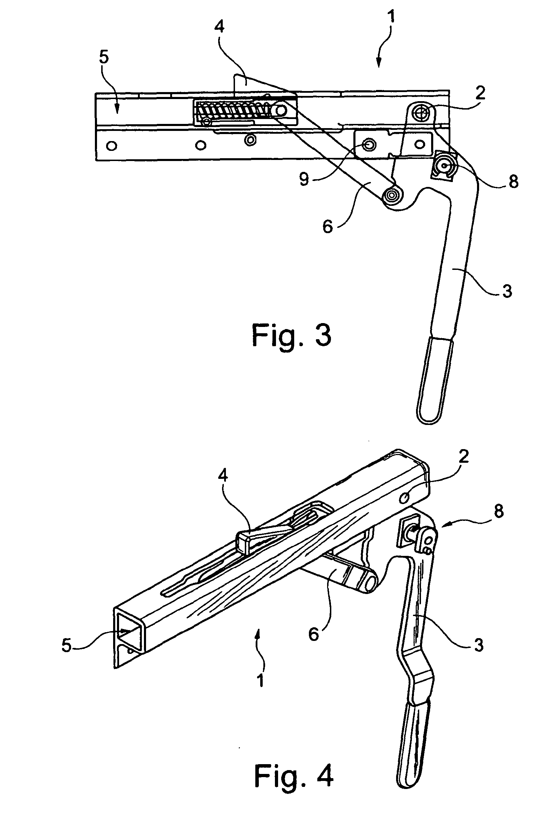

Dem Betätigungshebel 3 ist ein Verriegelungselement 8 zur Arretierung in seiner Verriegelungsposition zugeordnet, das am Betätigungshebel 3 angeordnet ist und mit einer entsprechenden Aussparung 9 in der Spanneinrichtung 1 zusammenwirkend ausgebildet ist. Somit wird zunächst bei öffnendem Verschwenken des Betätigungshebels 3 das Spannelement 4 über das Verbindungselement 6 in der Führung 5 zurückgezogen (vgl. Figuren 3 und 4), um bei weiterem öffnenden Verschwenken des Betätigungshebels 3 dann entsprechend der Figuren 5 und 6 dann durch den Freuraum 7 in der Führung 5 teilweise hindurch abgesenkt zu werden, so dass das Spannelement 4 oberseitig nicht mehr aus der Führung 5 herausragt und somit auch nicht mehr mit dem an dem Endlaufwagen 10 vorgesehenen und in der Zeichnung ebenfalls nicht dargestellten Gegenlager 11 zusammenwirkt, so dass der Endlaufwagen 10 frei bewegbar ist.

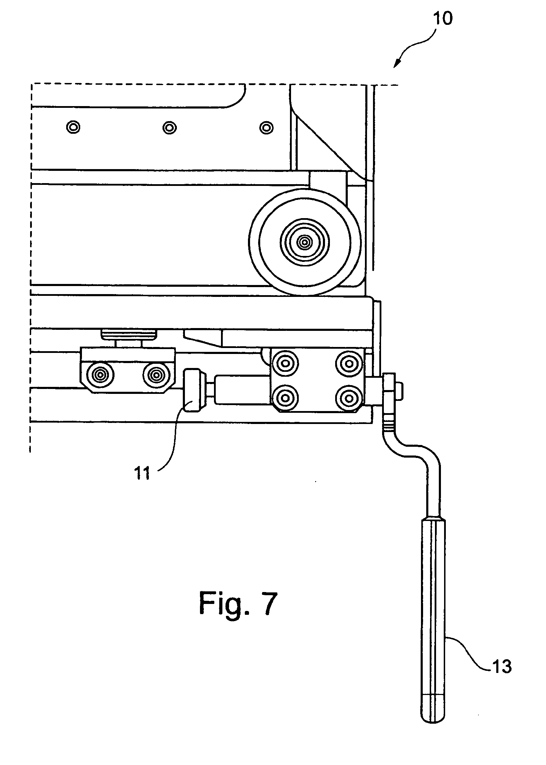

Für eine genaue Anpassung der Spanneinrichtung 1 an die erforderliche Spannkraft bzw. den erforderlichen Spannweg des Spannelements 4 weist das an dem Endlaufwagen 10 vorgesehene Gegenlager 11 - wie in Fig. 7 dargestellt - einen in seiner Position verlagerbarer und entsprechend in einer vorgewählten Position einstellbar ausgebildeter Anschlag 14 auf, so dass eine zu große Spannkraft verringerbar bzw. eine nicht ausreichende Spannkraft vergrößerbar ist. Die Einstellung des Anschlags 14 erfolgt dabei über ein entsprechendes, im dargestellten Ausführungsbeispiel als Kurbel 13 ausgebildetes Betätigungselement.

Alternativ kann auch dem an dem Endlaufwagen 10 vorgesehenen Gegenlager 11 ein in seiner Position verlagerbarer und entsprechend in einer vorgewählten Position einstellbar ausgebildeter Anschlag 14 zugeordnet sein, der Fahrzeugseitig und nicht an dem Endlaufwagen 10 vorgesehen ist.

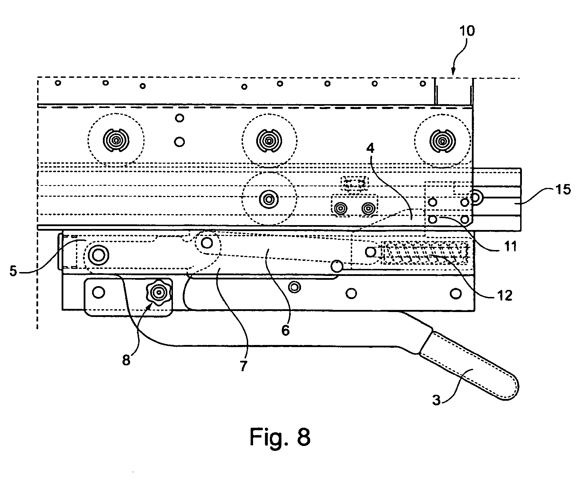

Gemäß Fig. 8 kann für eine genaue Anpassung der Spanneinrichtung 1 an die erforderliche Spannkraft bzw. den erforderlichen Spannweg des Spannelements 4 das Spannelement 4 gegen die Rückstellkraft eines als Spiralfeder 12 ausgebildeten Rückstellelementes, insbesondere Druckfederelement, verlagerbar in der Führung 5 vorgesehen und mit dem Verbindungselement 6 verbunden sein, so dass eine automatische Anpassung gegeben ist.

## Patentansprüche

1. Spanneinrichtung (1) für ein entlang von Lauf- und Führungsschienen verschiebliches Schiebeverdeck, wobei die Spanneinrichtung (1) im Bereich der Lauf- und Führungsschiene (15) vorgesehen ist und einen um eine Achse (2) verschwenkbar angeordneten und zwischen einer Verriegelungsposition und einer Freigabeposition verlagerbaren Betätigungshebel (3) sowie ein mit einem an einem Endlaufwagen (10) vorgesehenen Gegenlager (11) zusammenwirkendes und den Endlaufwagen (10) zum Ende der Lauf- und Führungsschiene (15) bewegendes, durch den Betätigungshebel (3) in seiner Position veränderbares Spannelement (4) aufweist, **dadurch gekennzeichnet, dass** das Spannelement (4) in einer entsprechend dem Verlauf der Lauf- und Führungsschiene (15) ausgerichteten Führung (5) angeordnet und über ein sowohl an dem Spannelement (4) als auch an dem Betätigungshebel (3) jeweils gelenkig angeschlagenes Verbindungselement (6) in seiner Führung (5) in Längsrichtung zwischen einer den Endlaufwagen (10) am Ende der jeweiligen Lauf- und Führungsschiene (15) haltenden Verriegelungsposition und einer Freigabeposition verlagerbar ist, wobei die Führung (5) in einem Teilbereich unterseitig einen solchen Freiraum (7) aufweist, dass das Spannelement (4) bei Verlagerung des Betätigungshebels (3) in die Freigabeposition soweit absenkbar ist, dass der Endlaufwagen (10) von dem Ende der Lauf- und Führungsschiene (15) weg verschoben werden kann.

2. Spanneinrichtung (1) nach dem vorhergehenden Anspruch, **dadurch gekennzeichnet, dass** die Anlenkung des Verbindungselements (6) an dem Betätigungshebel (3) derart vorgesehen ist, dass diese bei Verlagerung des Betätigungshebels (3) in die Verriegelungsposition über einen Totpunkt hinweg erfolgt.

3. Spanneinrichtung (1) nach einem der vorhergehenden Ansprüche, **dadurch gekennzeichnet, dass** das Spannelement (4) über ein insbesondere als Spiralfeder (12) ausgebildetes Druckfederelement, das bei in seiner Verriegelungsposition befindlichem Betätigungshebel (3) eine geringe Verlagerung innerhalb der Führung (5) ermöglicht, mit dem Verbindungselement (6) verbunden ist

4. Spanneinrichtung (1) nach einem der vorhergehenden Ansprüche, **dadurch gekennzeichnet, dass** dem Betätigungshebel (3) ein Verriegelungselement (8) zur Arretierung in seiner Verriegelungsposition zugeordnet ist.

5. Spanneinrichtung (1) nach dem vorhergehenden Anspruch, **dadurch gekennzeichnet, dass** das Verriegelungselement (8) am Betätigungshebel (3) angeordnet ist und mit einer entsprechenden Aussparung (9) in der Spanneinrichtung (1) zusammenwirkend ausgebildet ist.

6. Spanneinrichtung (1) nach einem der vorhergehenden Ansprüche, **dadurch gekennzeichnet, dass** der Betätigungshebel (3), insbesondere gegen eine Rückstellkraft, ausziehbar ausgebildet ist.

7. Spanneinrichtung (1) nach einem der vorhergehenden Ansprüche, **dadurch gekennzeichnet, dass** das an dem Endlaufwagen (10) vorgesehene Gegenlager (11) in seiner Position verlagerbar und entsprechend in einer vorgewählten Position einstellbar ausgebildet ist.

8. Spanneinrichtung (1) nach einem der vorhergehenden Ansprüche, **dadurch gekennzeichnet, dass** das an dem Endlaufwagen (10) vorgesehene Gegenlager (11) einen in seiner Position verlagerbaren und entsprechend in einer vorgewählten Position einstellbar ausgebildeten Anschlag (14) umfasst.

## Claims

1. A clamping device (1) for a sliding roof that is displaceable along guidance and runner rails, the clamping device (1) being provided in the region of the guidance and runner rail (15) and comprising an actuation lever (3) arranged pivotably about an axis (2) and shiftable between a locking position and a release position, as well as a clamping element (4) modifiable in its position by means of the actuation lever (3), which element co-acts with a countermember (11) provided on the end carriage (10) and moves the end carriage (10) to the end of the guidance and runner rail (15), **characterized in that** the clamping element (4) is arranged in a guide (5) aligned in accordance with the course of the guidance and runner rail (15), and is shiftable in its guide (5) in a longitudinal direction, by way of a connecting element (6) arrested in articulated fashion respectively on both the clamping element (4) and the actuation lever (3) between a locking position retaining the end carriage (10) at the end of the respective guidance and runner rail (15), and a release position, the guide (5) comprising in a subregion on the underside an open space (7) such that upon shifting of the actuation lever (3) into the release position, the clamping element (4) is lowerable to the extent that the end carriage (10) can be displaced away from the end of the guidance and runner rail (15).

2. The clamping device (1) according to the preceding claim, **characterized in that** the articulation of the connecting element (6) on the actuation lever (3) is provided in such a way that upon shifting of the actuation lever (3) into the locking position, the articulation takes place across a dead-centre point.

3. The clamping device (1) according to any one of the preceding claims, **characterized in that** the clamping element (4) is connected to the connecting element (6) via a compression spring element, embodied in particular as a helical spring (12) that, when the actuation lever (3) is in its locking position, enables a slight shifting within the guide (5).

4. The clamping device (1) according to any one of the preceding claims, **characterized in that** a locking element (8) is associated with the actuation lever (3) for immobilization in its locking position.

5. The clamping device (1) according to the preceding claim, **characterized in that** the locking element (8) is arranged on the actuation lever (3) and is embodied to co-act with a corresponding cutout (9) in the clamping device (1).

6. The clamping device (1) according to any one of the preceding claims, **characterized in that** the actuating lever (3) is embodied extensibly, in particular against a return force.

7. The clamping device (1) according to any one of the preceding claims, **characterized in that** the countermember (11) provided on the end carriage (10) is embodied to be shiftable in its position and correspondingly settable in a preselected position.

8. The clamping device (1) according to any one of the preceding claims, **characterized in that** the countermember (11) provided on the end carriage (10) encompasses a stop (14) shiftable in its position and correspondingly settable in a preselected position.

## Revendications

1. Dispositif de tension (1) pour une capote coulissante mobile en translation le long de rails de coulissement et de guidage, sachant que le dispositif de tension (1) est prévu dans la région du rail (15) de coulissement et de guidage et présente un levier d'actionnement (3) disposé à pivotement autour d'un axe (2) et pouvant être déplacé entre une position de verrouillage et une position de libération, ainsi qu'un élément de tension (4) dont la position peut être modifiée par le levier d'actionnement (3), élément qui coopère avec un contre-appui (11) prévu sur un chariot terminal (10) et qui déplace le chariot terminal (10) vers l'extrémité du rail (15) de coulissement et de guidage, **caractérisé en ce que** l'élément de tension (4) est disposé dans un guide (5) orienté conformément à l'allure du rail (15) de coulissement et de guidage, et peut être déplacé en direction longitudinale dans son guide (5), au moyen d'un élément de liaison (6) respectivement accroché de manière articulée tant à l'élément de tension (4) qu'au levier d'actionnement (3), entre une position de verrouillage maintenant le chariot terminal (10) à l'extrémité du rail respectif (15) de coulissement et de guidage et une position de libération, sachant que le guide (5) présente dans une région partielle, sur le dessous, un espace libre (7) tel que l'élément de tension (4), lors du déplacement du levier d'actionnement (3) dans la position de libération, peut être abaissé dans une mesure telle que le chariot terminal (10) peut être déplacé en translation en éloignement de l'extrémité du rail (15) de coulissement et de guidage.

2. Dispositif de tension (1) selon la revendication précédente, **caractérisé en ce que** l'articulation de l'élément de liaison (6) sur le levier d'actionnement (3) est prévue de telle sorte qu'elle passe par un point mort lors du déplacement du levier d'actionnement (3) dans la position de verrouillage.

3. Dispositif de tension (1) selon l'une des revendications précédentes, **caractérisé en ce que** l'élément de tension (4) est relié à l'élément de liaison (6) au moyen d'un élément formant ressort de compression qui est notamment réalisé sous forme de ressort spiral (12) et qui permet, lorsque le levier d'actionnement (3) se trouve dans sa position de verrouillage, un léger déplacement à l'intérieur du guide (5).

4. Dispositif de tension (1) selon l'une des revendications précédentes, **caractérisé en ce qu'**un élément de verrouillage (8) est associé au levier d'actionnement (3) pour le blocage dans sa position de verrouillage.

5. Dispositif de tension (1) selon la revendication précédente, **caractérisé en ce que** l'élément de verrouillage (8) est disposé sur le levier d'actionnement (3) et est conçu pour coopérer avec un évidement correspondant (9) dans le dispositif de tension (1).

6. Dispositif de tension (1) selon l'une des revendications précédentes, **caractérisé en ce que** le levier d'actionnement (3) est conçu déployable, en particulier à l'encontre d'une force de rappel.

7. Dispositif de tension (1) selon l'une des revendications précédentes, **caractérisé en ce que** le contre-appui (11) prévu sur le chariot terminal (10) est de position déplaçable et est conçu réglable d'une manière correspondante dans une position présélectionnée.

8. Dispositif de tension (1) selon l'une des revendications précédentes, **caractérisé en ce que** le contre-appui (11) prévu sur le chariot terminal (10) comprend une butée (14) dont la position peut être déplacée et qui est conçue réglable d'une manière correspondante dans une position présélectionnée.
